# EUROPEAN PATENT APPLICATION

(11) **EP 1 507 390 A1**
(43) Date of publication of application: **16.02.2005**
(21) Application number: 04016968.2
(22) Date of filing: 19.07.2004
(51) Int. Cl.: H04M 1/725, G06F 17/60

(54) **Content downloading system and method for a mobile terminal with a preview function**

(30) Priority: 09.08.2003 KR 2003055203
(71) Applicant: LG ELECTRONICS INC., Seoul (KR)
(72) Inventor: Kim, Tae-Yong, Gangseo-Gu Seoul (KR)
(74) Representative: von Hellfeld, Axel, Dr. Dipl.-Phys.

(57) **Abstract**

A system for downloading content to a mobile terminal is provided. The system comprises a user interface mechanism for allowing a user to select a content; and a preview mechanism for allowing a user to preview the selected content, wherein a user may select to preview the content without downloading the entire content.

## Description

### BACKGROUND OF THE INVENTION

### 1. Field of the Invention

The present invention relates to a content downloading apparatus and method and, more particularly, to a content downloading system and method of a mobile terminal.

### 2. Description of the Related Art

A data communication technology referred to as 1xEV-DO (Evolution-Data Only) employs an exclusive protocol for packet data transmission, allowing a maximum transmission rate of up to about 2.5 Mbps in a forward direction. This technology also provides a real time video service or a multimedia download service.

The 1xEV-DO technology may be utilized in CDMA wireless communication systems. Consumers, especially, young people are increasingly favoring services provided through the 1xEV-DO technology. However, various "contents" (e.g., multimedia data) provided through 1xEV-DO are quite expensive because of the cost associated with downloading contents.

In addition, a user may preview a portion of the actual contents by using a preview function before downloading the desired contents. As such, additional costs for the preview are also incurred. Thus, in order to minimize costs, most users download contents without reviewing the contents. This may be problematic, however, because the downloaded contents may not be what the user initially desired or the quality of the actual contents may not satisfy the user.

Accordingly, a system and method is needed to overcome the above shortcomings.

### SUMMARY OF THE INVENTION

A system for downloading content to a mobile terminal is provided. The system comprises a user interface mechanism for allowing a user to select content previously downloaded onto the system; and a preview mechanism for allowing a user to preview the selected content; wherein a user may select to preview the content without downloading the entire content.

The system further comprises a connector connecting the mobile terminal to the system to download content over the connector. The connector may comprise an infrared port, or a data cable connected between a serial port of the mobile terminal and a serial port of the system.

In a preferred embodiment, the connector operates based on a wireless communication technology, such as the infrared, or the Bluetooth technology. The user interface mechanism comprises a display unit and a speaker unit for supporting preview and pre-listening functions, respectively. In one embodiment, the content comprises audio, visual, or multimedia data.

In accordance with another embodiment, a method for downloading content to a mobile terminal is provided. The method comprises storing content in a mobile preview system; selecting a content stored in the mobile preview system; previewing the selected content by interacting with a user interface of the mobile preview system; and downloading the selected content in its entirety from the mobile preview system to the mobile terminal.

Preferably, the selected content is downloaded from the mobile preview system to the mobile terminal over a wireless communication connection. The wireless communication connection may be established over a Bluetooth connection, an Infrared connection. Alternatively, the selected content is downloaded from the mobile preview system to the mobile terminal over a wired communication connection.

### BRIEF DESCRIPTION OF THE DRAWINGS

The invention will be described in detail with reference to the following drawings in which like reference numerals refer to like elements.

Figure 1 illustrates an exemplary local area wireless communications network, in accordance with one embodiment of the invention.

Figure 2 illustrates a contents downloading system for a mobile terminal, in accordance with a preferred embodiment of the present invention.

Figure 3 is a flow chart of a process of implementing a contents downloading method for a mobile terminal, in accordance with one embodiment of the present invention.

### DETAILED DESCRIPTION OF THE PREFERRED EMBODIMENTS

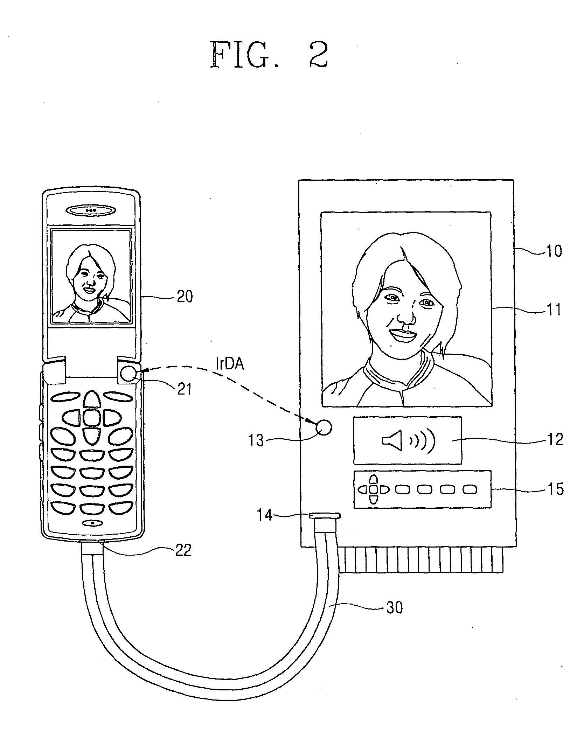

Referring to Figure 2, a contents downloading system for a mobile terminal 20 is provided. Mobile terminal 20, in accordance with one embodiment of the invention, may be a mobile communication device, a user equipment, a PDA, or other computing device capable of displaying media content.

A contents downloading device 10 is provided for downloading and storing contents from a communication network. The downloaded content is then transferred to mobile terminal 20, in accordance with one aspect of the invention.

Mobile terminal 20 has a multimedia function. A connector, such as a data cable 30, is used to connect mobile terminal 20 to contents downloading device 10 to allow for downloading contents from contents downloading device 10 to mobile terminal 20.

In one embodiment, terminal 20 and downloading device 10 may be connected by way of a local area wireless communication network. The local area wireless communication network, depending on implementation, may be established using an IrDA (Infra-red Data Association), Bluetooth or other wireless communication technology.

IrDA is a technique for transmitting data by way of infrared signals without the use of a cable. An IrDA communication port, according to one embodiment of the invention, transmits and receives digital information at a rate of 115,200 bits per second, for example.

While embodiments of the invention are disclosed as utilizing IrDA technology, one skilled in the art would appreciate that other wireless communication technologies (e.g., Bluetooth, IEEE 802.11, etc.) may be used in other embodiments to perform the same function, without detracting from the scope of the invention.

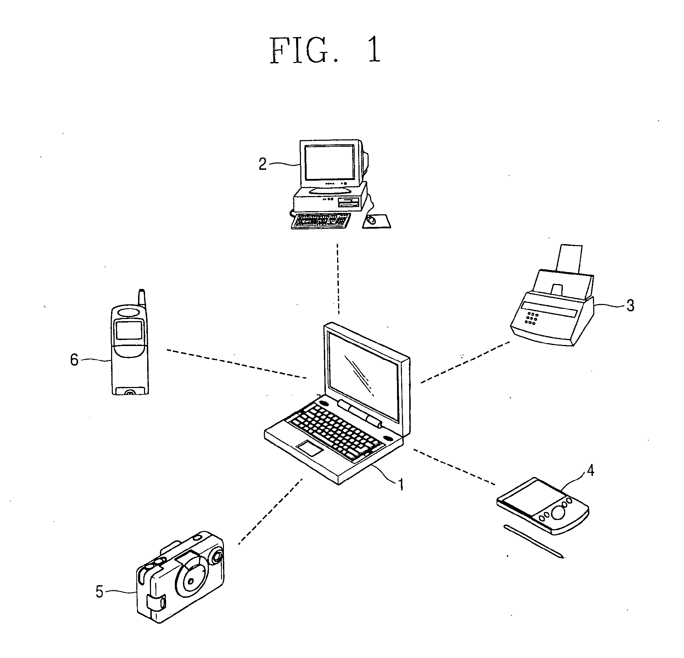

With reference to Figure 1, for example, when a user uses a notebook computer having an IrDA communication function, the user can position the notebook computer 1 to face towards an infrared port of another device, (e.g., a printer 3, a desktop computer 2, a PDA 4, a digital camera 5, or a cell phone 6) to communicate information there between. Information may be communicated by clicking a data transmission button, for example, located on one of the devices.

IrDA technology can be used in various situations, such as sending a document from notebook computer 1 to printer p, exchanging electronic business cards by using a PDA 4, adjusting a schedule or a phone book list between desktop computer 2 and notebook computer 1, sending a fax message from notebook computer 1 to a facsimile, or sending an image or video from a digital camera 5 or a camcorder (not shown) to a computer 2. IrDA technology is a very stable technique because it is not affected by unexpected phenomena, such as frequency interference, that plagues other wireless communication technologies.

With respect to Figure 2, the contents downloading device 10 comprises a display unit 11 and a speaker unit 12 for supporting a preview or pre-listening function, respectively. A preferred embodiment may comprise local area wireless communication interface unit 13 for transmitting data in a local area wireless communication network.

In one embodiment, a serial port 14 is provided to allow a mobile terminal 20 having no local area wireless communication function to connect to contents downloading device 10. A user interface unit 15 for providing an interface with a user menu and other selection functions is also provided in one embodiment. The preview and pre-listening functions respectively supported by the display unit 11 and the speaker unit 12 allow the user to preview or listen to a portion of the contents prior to downloading the desired contents stored on contents downloading device 10.

Mobile terminal 20 comprises a local area wireless communication interface unit 21 for transmitting and receiving data, so that mobile terminal 20 can download contents by way of communicating with the contents downloading device 10 over the wireless communication interface. The data cable 30 connects the serial port 22 of the terminal 20 with the serial port 14 of the contents downloading device 10 so that the terminal can download contents, if a local area wireless communication network is not available.

User interface 15 may include an input device such as a keypad and a touch screen or a mouse. A user may interact with user interface 15 to transmit a signal so that a corresponding operation, such as downloading contents can be performed.' The download contents may comprise television broadcasts, movies, music videos, photos, pictures, animation, audio sounds, MP3 files, games, or the like.

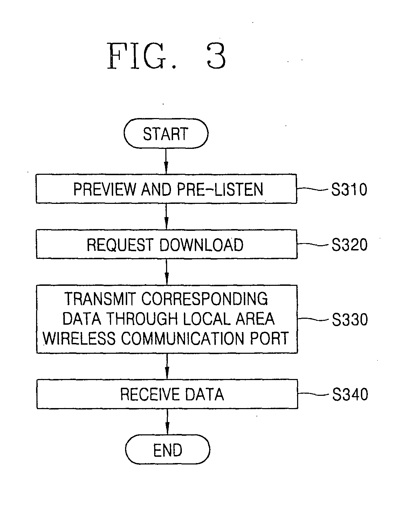

With reference to Figure 3, when the user desires to download contents, the user may first review the contents, such as, a video or music, through a preview or pre-listening function of contents downloading device 10 (S310). The display unit 11 and/or the speaker unit 12 output the contents downloaded by contents downloading device 10 for user preview The user can then select the desired contents based on the preview and request to download the desired contents by way of interacting with user interface 15 (S320).

In one embodiment, a controller (not shown) of the contents downloading device 10 transfer data corresponding to the user's selected contents over a local area wireless communication network (e.g., IrDA interface port 21) established between contents downloading device 10 and mobile terminal 20 (s330).

In an exemplary embodiment, the IrDA interface port 21 of the mobile terminal 20 is used to receive the content transmitted over infrared signals (5340). As such, the user can enjoy the downloaded contents. In another embodiment, if the mobile terminal 20 does not have a wireless port, it can download contents by way of physically connecting to the contents downloading device 10 with a data cable 30 by way of a serial port 22 used for rapid battery charging, for example. Thus a wireless interface (e.g., IrDA interface port 21) may not be needed at all times for the mobile terminal 20 to download the desired contents.

If the mobile terminal 20 does not have an IrDA function, the user connects the serial port 22 of the terminal 20 with the serial port 14 of the contents downloading device 10 via the data cable 30, whereby the contents downloading device 10 can transfer data corresponding to user's selected contents to the terminal 20via the connected data cable 30.

In one embodiment, in downloading contents to a mobile terminal, a local area wireless communication method instead of a 1xEV-DO technology is utilized, so that the user's burden in paying for expensive downloading of contents can be minimized.

In addition, using the preview and the pre-listening functions, the user can select the type and quality of the contents at a lower cost. Namely, receiving contents (such as video) at a lower quality would be less expensive for the user who may be satisfied with such lower quality video images for certain types of contents.

The contents downloading system and method of the present invention can be easily applied, implemented and supported by providing in the downloading device the appropriate hardware and/ore software drivers for each manufacturer of mobile terminals.

The foregoing embodiments and advantages are merely exemplary and are not to be construed as limiting the present invention. The present teaching can be readily applied to other types of apparatuses and/or methods. The description of the present invention is intended to be illustrative, and not to limit the scope of the claims. Many alternatives, modifications, and variations will be apparent to those skilled in the art.

## Claims

1. A system for downioading content to a mobile terminal, the system comprising:
a user interface mechanism for allowing a user to select a content; and
a preview mechanism for allowing a user to preview a portion of the selected content;
wherein a user may select to preview a portion of the selected content without downloading the selected content in its entirety.

2. The system of claim 1, further comprising:
a connector connecting the mobile terminal to the system to download the selected content over the connector.

3. The system of claim 1, wherein the connector comprises an infrared port.

4. The system of claim 1, wherein the connector comprises a data cable.

5. The system of claim 1, wherein the connector operates based on a wireless communication technology.

6. The system of claim 5, wherein the wireless communication technology comprises Bluetooth technology.

7. The system of claim 1, wherein the preview mechanism comprises a display unit and a speaker unit.

8. The system of claim 4, wherein the data cable is connected between a serial port of the mobile terminal and a serial port of the system.

9. The system of claim 1, wherein the content comprises visual data.

10. The system of claim 1, wherein the content comprises audio data.

11. A method for downloading content to a mobile terminal, the method comprising:
storing content in a mobile preview system;
selecting a content stored in the mobile preview system;
previewing the selected content by interacting with a user interface of the mobile preview system; and
downloading the selected content in its entirety from the mobile preview system to the mobile terminal.

12. The method of claim 11, wherein the selected content is downloaded from the mobile preview system to the mobile terminal over a wireless communication connection.

13. The method of claim 12, wherein the wireless communication connection is established over a Bluetooth connection.

14. The method of claim 12, wherein the wireless communication connection is established over an Infrared connection.

15. The method of claim 11, wherein the selected content is downloaded from the mobile preview system to the mobile terminal over a wired communication connection.
